# EUROPEAN PATENT APPLICATION

(11) **EP 2 503 601 A1**
(43) Date of publication of application: **26.09.2012**
(21) Application number: 11159055.0
(22) Date of filing: 21.03.2011
(51) Int. Cl.: H01L 31/048

(54) **Junction box and manufacturing method thereof**

(71) Applicant: Lee, Ho IL, Seoul (KR)
(72) Inventor: Lee, Ho IL, Seoul (KR)
(74) Representative: Bauer Vorberg Kayser Patentanwälte

(57) **Abstract**

The present disclosure relates to a junction box and a manufacturing method thereof. The junction box includes terminal member to which electric energy is supplied, a diode provided to the terminal member, and a heat sink brought into close contact with the diode by molding. The junction box may prevent malfunction and failure while achieving size reduction thereof.

## Description

### BACKGROUND

### 1. Technical Field

The present disclosure relates to a junction box and a manufacturing method thereof, and more particularly to a junction box and a method of manufacturing the same, which can prevent malfunction and failure while achieving size reduction.

### 2. Description of the Related Art

Generally, a photovoltaic module directly converts sunlight into electric power, and includes a plurality of solar cells disposed on an upper surface of a planar base plate and a transparent cover plate located above the solar cells.

The photovoltaic module is provided at a rear side thereof with ribbon members formed of a conductive material and extracted from the photovoltaic module, and a junction box is provided for stability in electric connection between the ribbon members and a cable member.

The junction box includes terminal members, each of which is connected at opposite sides thereof with the corresponding ribbon member and the cable member, respectively.

Further, a bypass diode is disposed on the terminal member to allow electric current to bypass a solar cell suffering low power generation, and is provided with a heat sink to prevent the diode from overheating.

It should be noted that the above description is provided for understanding of the background art and is not a description of a well-known conventional technique in the art.

In a conventional junction box, since a fastening member is used to connect the diode and the heat sink, there is a problem of inefficient heat dissipation due to poor contact therebetween, causing malfunction and failure of the junction box.

Further, since the heat sink of the conventional junction box is liable to suffer from poor contact limiting improvement of heat dissipation efficiency, the conventional junction box requires a large capacity heat sink, which makes it difficult to reduce the size of a final product.

Therefore, there is a need for an improved junction box that solves such problems.

### BRIEF SUMMARY

To improve upon the art and address one or more of the needs outlined above, the present disclosure provides a junction box and a method of manufacturing the same, which can prevent malfunction and failure while achieving size reduction.

In accordance with one aspect of the present disclosure, a junction box includes a terminal member to which electric energy is supplied; a diode provided to the terminal member; and a heat sink brought into close contact with the diode by molding.

The heat sink may closely contact a front side of the diode.

The heat sink may closely contact front sides of the diode and the terminal member.

The heat sink may be composed of an alumina ceramic material.

In accordance with another aspect of the present disclosure, a method of manufacturing a junction box includes: mounting a diode on a terminal member to which electric energy will be supplied; injecting a molding material into a mould, with the diode placed inside the mould; and releasing the mould and curing the molding material to form a heat sink which closely contacts the diode.

In accordance with a further aspect of the present disclosure, a method of manufacturing a junction box includes: mounting a diode on a terminal member to which electric energy will be supplied; assembling a ribbon member to the terminal member, with the terminal member and the diode placed inside a case; injecting a molding material into the case; and curing the molding material to form a heat sink closely contacting the diode.

### BRIEF DESCRIPTION OF THE DRAWINGS

The above and other aspects, features and advantages of the present disclosure will become apparent from the following description of embodiments given in conjunction with the accompanying drawings, in which:
Fig. 1 is a plan view of a junction box according to an embodiment of the present disclosure;
Fig. 2 is a side view of the junction box according to the embodiment of the present disclosure;
Fig. 3 is a front view of the junction box according to the embodiment of the present disclosure;
Fig. 4 is a plan view of a connection structure between diodes and a heat sink of the junction box according to the embodiment of the present disclosure;
Fig. 5 is a flowchart of a method of manufacturing a junction box according to one embodiment of the present disclosure; and
Fig. 6 is a flowchart of a method of manufacturing a junction box according to another embodiment of the present disclosure.

### DETAILED DESCRIPTION

Embodiments of the present disclosure will now be described in detail with reference to the accompanying drawings. It should be noted that the drawings are not to precise scale and may be exaggerated in thickness of lines or size of components for descriptive convenience and clarity only. Furthermore, terms used herein are defined by taking functions of the present disclosure into account and can be changed according to the custom or intention of users or operators. Therefore, definition of the terms should be made according to the overall disclosure set forth herein.

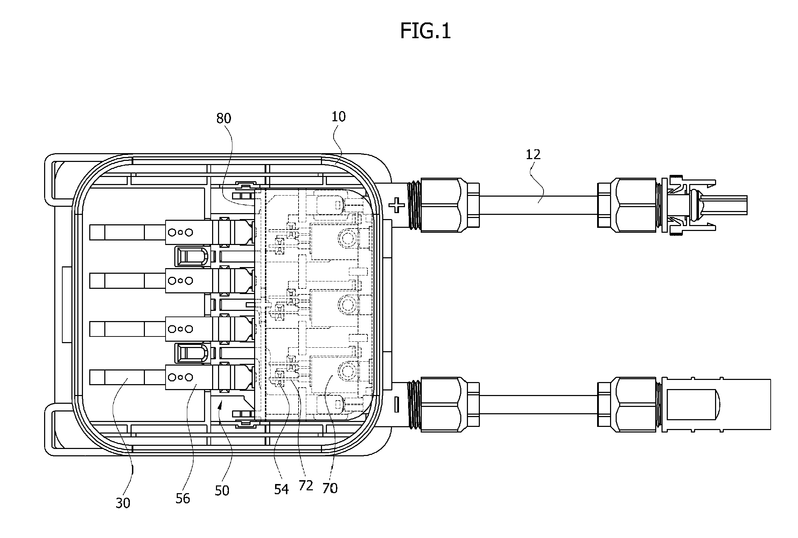

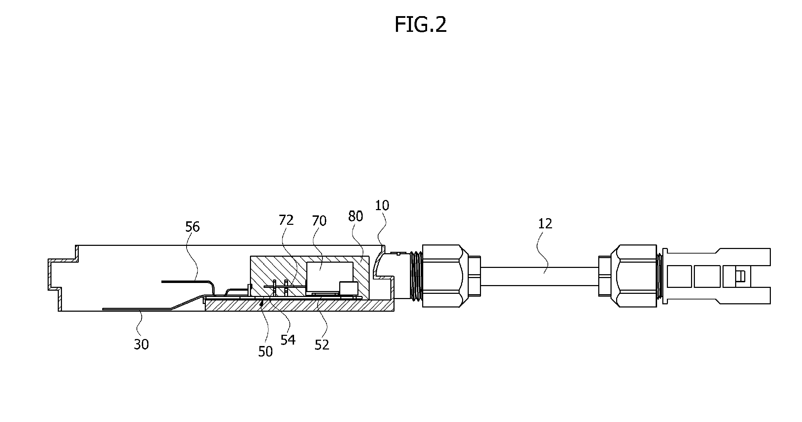

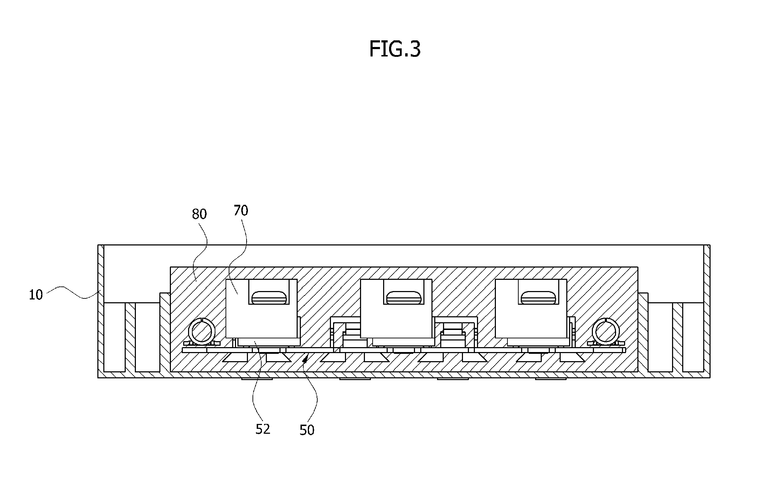

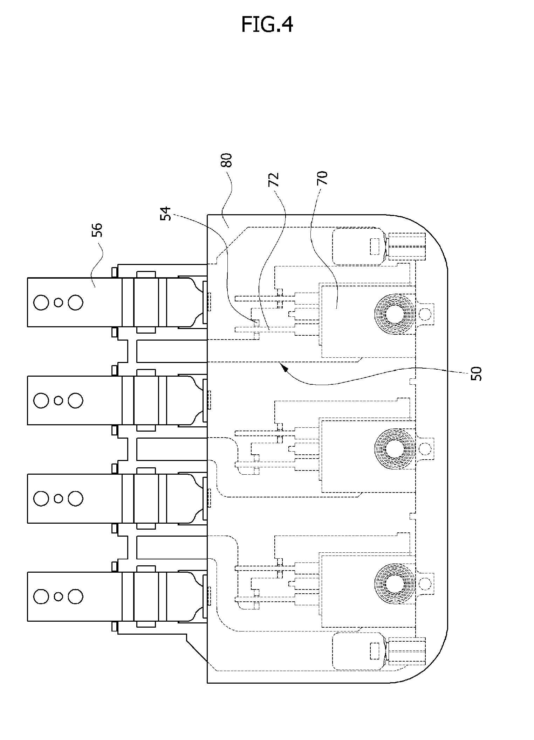

Fig. 1 is a plan view of a junction box according to an embodiment of the present disclosure, Fig. 2 is a side view of the junction box according to the embodiment, Fig. 3 is a front view of the junction box according to the embodiment, and Fig. 4 is a plan view of a connection structure between diodes and a heat sink of the junction box according to the embodiment.

Referring to Figs. 1 to 4, a junction box according to an embodiment includes terminal members 50 to which electric energy is supplied, diodes 70 provided to the terminal members 50, and a heat sink 80 brought into close contact with the diodes 70 by molding.

Since the heat sink 80 is brought into close contact with the diodes 70 by molding, there is no need for a separate fastening member and it is possible to prevent formation of a gap between the diodes 70 and the heat sink 80, thereby allowing heat to be transferred from the diodes 70 to the heat sink 80.

Accordingly, since the heat sink 80 has improved heat dissipation efficiency, an inexpensive diode having relatively low performance may be used for the junction box without causing malfunction and failure due to overheating of the diode.

In preparation of the heat sink 80, after the terminal member 50 is mounted on each of the diodes 70, the terminal members 50 and the diodes 70 are placed inside a mould and a molding material for the heat sink 80 is injected into the mould to form the heat sink 80.

Then, the heat sink 80 is formed to closely contact the diodes 70 by curing the molding material after releasing the mould.

Since the heat sink 80 formed by molding closely contacts the front sides of the diodes 70, a contact area between the diodes 70 and the heat sink 80 increases, thereby improving heat dissipation efficiency of the heat sink.

Further, the junction box according to the embodiment is provided with multiple ribbon members 30, which are respectively connected to the terminal members 50 having the diodes 70 mounted thereon.

Since the heat sink 80 is provided to all of the diodes 70 through a single molding operation, the heat sink 80 may be significantly easily provided to the junction box.

As such, the junction box according to the embodiment may reduce the number of components and allows significantly easy installation of the heat sink 80, as compared with the conventional junction boxy that employs separate fastening members for connecting the heat sink to the diodes 70.

Further, since the molding operation is carried out with the diodes 70 coupled to the terminal members 50, the heat sink 80 absorbs heat from the diodes 70 and the terminal members 50 while closely contacting the front sides of the diodes 70 and the terminal members 50. Therefore, it is possible to achieve more effective prevention of overheating of the junction box.

Such a heat sink 80 may be formed of an alumina ceramic material, but is not limited thereto. Namely, any material can be used to form the heat sink so long as the material can closely contact the diodes when forming the heat sink 80 by molding. The material is apparent to a person having ordinary knowledge in the art, and a detailed description thereof will be omitted herein.

Reference numeral 12 denotes a cable member 12 electrically connected to the terminal members 50.

Next, a method of manufacturing a junction box according to one embodiment will be described.

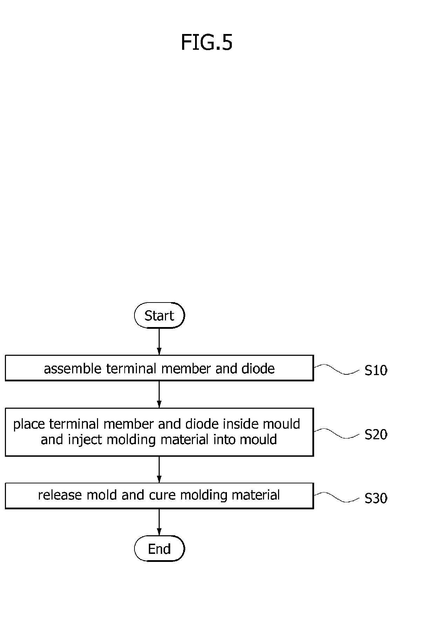

Fig. 5 is a flowchart of a method of manufacturing a junction box according to one embodiment of the present disclosure.

Referring to Figs. 1 to 5, the method of manufacturing the junction box according to the embodiment includes mounting diodes 70 on terminal members 50 to which electric energy will be supplied in S10; injecting a molding material into a mould, with the diodes 70 placed inside the mould in S20; and releasing the mould and curing the molding material in S30.

In preparation of the heat sink 80, after each of the diodes 70 is coupled to a seating portion 52 of the terminal member 50 to allow a terminal 72 of the diode 70 to be electrically connected to a connecting portion 54 of the terminal member 50, the terminal members 50 and the diodes 70 are placed inside the mould, and a molding material such as an alumina ceramic material is injected into the mould.

When a preset period of time passes after injection of the molding material, the mould is released and the molding material is cured to form a heat sink 80 which closely contacts front sides of the diodes 70 and the terminal members 50.

Then, the terminal members 50 and the diodes 70 are coupled inside a case 10, and ribbon members 30 are inserted into the case 10 and coupled to the terminal members 50 by compressing members 56.

When the heat sink 80 is prepared by the method as described above, the heat sink 80 can be provided to the junction box so as to make close contact with the plural diodes 70 by a single molding operation. Therefore, the method according to the embodiment may achieve easier installation of the heat sink than the conventional junction box which includes a heat sink coupled to a plurality of diodes 70 through individual fastening members.

Further, since a coupled portion between the terminal 72 and the connecting portion 54 is also surrounded by the heat sink 80, it is possible to prevent short circuit due to poor contact therebetween.

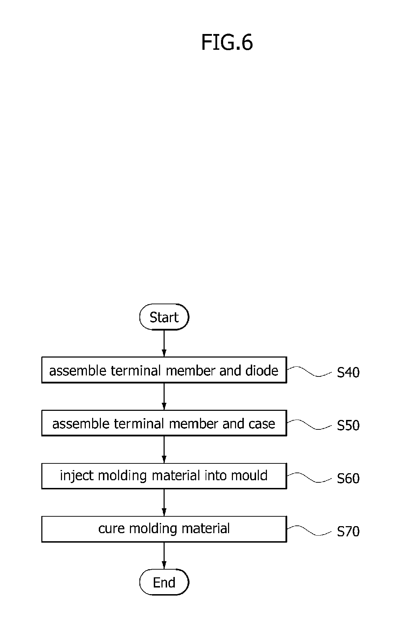

Fig. 6 is a flowchart of a method of manufacturing a junction box according to another embodiment of the present disclosure.

Referring to Figs. 1 to 6, the method of manufacturing a junction box according to this embodiment includes mounting diodes 70 on terminal members 50 to which electric energy will be supplied, in S40; assembling a ribbon member to each of the terminals 50, with the terminal members 50 and the diodes 70 placed inside a case 10, in S50; injecting a molding material into the case 10, in S60; and curing the molding material to form a heat sink 80 closely contacting the diodes 70 in S70.

After the diodes 70 are mounted on the terminal members 50, the terminal members 50 are placed inside the case 10 and ribbon members 30 are mounted on the terminal members 50 by compressing members 56, respectively.

Then, a molding material such as an alumina ceramic material is injected into the case 10 and cured to form the heat sink 80 which closely contacts front sides of the diodes 70.

As described above, since the molding material is injected into the case 10 without a separate mould to provide the heat sink 80, the heat sink 80 can be more easily provided to the junction box than in the above embodiment.

As such, in the junction box according to the embodiments, the heat sink contacts the front side of the diode to prevent the diodes from overheating, thereby preventing malfunction and failure of the junction box due to overheating of the diode.

Further, the heat sink according to the embodiments is brought into close contact with the front side of the diode by molding without a separate fastening member, thereby reducing the number of components and the size of the junction box.

Further, according to the embodiments, since the heat sink may be provided to the diode after the diodes and the terminal members are assembled to the case, the heat sink can be easily assembled to the diodes.

Although some embodiments have been described in the present disclosure, it should be understood by those skilled in the art that these embodiments are given by way of illustration only, and that various modifications, variations, and alterations can be made without departing from the spirit and scope of the present disclosure. Further, the description of the junction box for solar cells and the manufacturing method thereof as provided herein are merely provided for illustration of the present disclosure and the subject matter of the present disclosure can be applied to other products. The scope of the present disclosure should be limited only by the accompanying claims and equivalents thereof.

## Claims

1. A junction box comprising:
a terminal member to which electric energy is supplied;
a diode provided to the terminal member; and
a heat sink brought into close contact with the diode by molding.

2. The junction box of claim 1, wherein the heat sink closely contacts a front side of the diode.

3. The junction box of claim 1, wherein the heat sink closely contacts front sides of the diode and the terminal member.

4. The junction box of claim 1, wherein the heat sink comprises an alumina ceramic material.

5. A method of manufacturing a junction box, comprising:
mounting a diode on a terminal member to which electric energy will be supplied;
injecting a molding material into a mould, with the diode placed inside the mould; and
releasing the mould and curing the molding material to form a heat sink which closely contacts the diode.

6. A method of manufacturing a junction box, comprising:
mounting a diode on a terminal member to which electric energy will be supplied;
assembling a ribbon member to the terminal member, with the terminal member and the diode placed inside a case;
injecting a molding material into the case; and
curing the molding material to form a heat sink closely contacting the diode.
